(19) Europäisches Patentamt
European Patent Office
Office européen des brevets

(11) Veröffentlichungsnummer: **0 347 669**
**A2**

# (12) EUROPÄISCHE PATENTANMELDUNG

(21) Anmeldenummer: **89110462.2**

(51) Int. Cl.⁴: **C08G 75/23 , C08G 65/38**

(22) Anmeldetag: **09.06.89**

(30) Priorität: **22.06.88 DE 3820959**

(43) Veröffentlichungstag der Anmeldung: **27.12.89 Patentblatt 89/52**

(84) Benannte Vertragsstaaten: **DE FR GB IT NL**

(71) Anmelder: **BAYER AG**

**D-5090 Leverkusen 1 Bayerwerk(DE)**

(72) Erfinder: **Eckel, Thomas, Dr.**
**Gneisenaustrasse 15a**
**D-4047 Dormagen 1(DE)**
Erfinder: **Fuhr, Karl, Dr.**
**Krüllsdyk 55**
**D-4150 Krefeld 1(DE)**
Erfinder: **Ott, Karl-Heinz, Dr.**
**Paul-Klee-Strasse 54**
**D-5090 Leverkusen 1(DE)**

## (54) Verfahren zur Herstellung von aromatischen Polyethersulfonen.

(57) Gegenstand der vorliegenden Erfindung ist ein Verfahren zur Herstellung von hochmolekularen, aromatischen Polyethersulfonen aus Diphenolen und Dihalogenarylen, das dadurch gekennzeichnet ist, daß man N-alkylierte Säureamide als Lösungsmittel einsetzt und damit gleichzeitig das bei der Reaktion entstehende Wasser azeotrop entfernt.

EP 0 347 669 A2

Xerox Copy Centre

## Verfahren zur Herstellung von aromatischen Polyethersulfonen

Gegenstand der vorliegenden Erfindung ist ein Verfahren zur Herstellung von hochmolekularen, aromatischen Polyethersulfonen durch Umsetzen von äquimolaren Mengen Diphenolen mit Dihalogenarylen in einem polaren, aprotischen Lösungsmittel in Gegenwart von wasserfreiem Alkalicarbonat, das dadurch gekennzeichnet ist, daß man

a) 1 bis 1,2 Mol Alkalicarbonat pro Mol Diphenol einsetzt,

b) als polare Lösungsmittel N-alkylierte Säureamide mit Siedepunkten im Bereich von 150° C bis 270° C, vorzugsweise von 180° C bis 250° C einsetzt und

c) in Abwesenheit zusätzlicher Schleppmittel das bei der Reaktion entstehende Wasser vollständig bei Temperaturen von 5° C bis 20° C unterhalb der Siedetemperatur des jeweiligen, als Lösungsmittel eingesetzten N-alkylierten Säureamids azeotrop als N-alkyliertes Säureamid/Wasser-Gemisch entfernt.

Polymere mit Sulfon- und Ethergruppen sind bereits bekannt.

Gemäß DE-AS 1 545 106 erfolgt die Herstellung aus Bis-alkali-bis-phenolaten und Bis-halogenarylen unter wasserfreien Bedingungen in flüssiger Phase in einem Sulfoxid oder Sulfon als Lösungsmittel, wobei als Colösungsmittel Chlorbenzol, Dichlorbenzol oder Xylol mitverwendet werden kann.

Nachteilig bei diesem Verfahren ist, daß man die Umsetzung wasserfrei durchführen muß, was u. U. eine aufwendige Herstellung des Bis-alkali-bis-phenolats notwendig macht (siehe Spalte 4, Zeilen 38 bis Spalte 5, Zeile 13 der DE-AS 1 545 106).

Gemäß DE-AS 1 795 725 werden Polysulfone dadurch hergestellt, daß man Alkalisalze von 4-(4-Halogenphenyl-sulfonyl)-phenolen der Formel

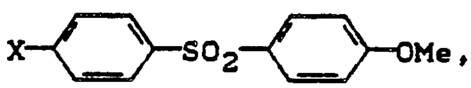

worin X Chlor oder Fluor und Me Alkali bedeutet, bei einer Temperatur oberhalb 150° C erhitzt. Für die Reaktion, sei es zur Bilding des obigen Alkalisalzes, sei es zu dessen Weiterreaktion zum polymeren Sulfon, sind verschiedene polare Lösungsmittel geeignet (siehe Spalte 3, Zeilen 5 bis 48 der DE-AS). N-alkylierte Säureamide sind nicht genannt.

Aus dem canadischen Patent Nr. 847 963 ist ein ein- oder zweistufiges Verfahren zur Herstellung von Polyarylenpolysulfonpolyethern bekannt.

Hierbei werden bei der Umsetzung von Diphenolen mit Dihalogenarylen Alkalicarbonate als Base und Sulfoxide bzw. Sulfone als Lösungsmittel eingesetzt. Die Entfernung von $H_2O$, das den Komponenten vor der Reaktion anhaftet oder in der Reaktionsmasse entsteht, ist azeotrop möglich, indem man den Reaktanten Azeotropbildner zusetzt, wie etwa Benzol, Xylol, Halogenbenzole etc., und die Reaktanten somit vor der Umsetzung trocknet (Seite 7, Absätze 2 und 3 und Seite 8 Absatz 1 des canadischen Patents Nr. 847 963). Azeotropbildner können zusammen mit dem Sulfoxid- oder Sulfon-Lösungsmittel auch bei der anschließenden Polymerbildung anwesend sein und als Cosolvenz wirken.

Demgegenüber verzichtet das erfindungsgemäße Verfahren auf speziell zugesetzte Azeotropbildner, da die als Lösungsmittel gewählten N-alkylierten Säureamide die Funktion der Azeotropbildner mit übernehmen. Dies wurde durch die Lehre des Ca-PS 847 963 nicht nahegelegt.

Aus der DE-OS 1 957 091 ist die Herstellung von Polyarylsulfonen bekannt, wobei wiederum wasserfreies Kaliumcarbonat als Base verwendet wird.

Als polare Lösungsmittel dienen solche, die oberhalb von 100° C sieden.

Beispiele dafür sind Sulfone wie Diphenylsulfon oder Diethylsulfon und Säureamide wie Dimethylacetamid und Dimethylformamid; bevorzugtes polares Lösungsmittel ist Dimethylformamid. Da pro molaren Anteil Bisphenol zwei molare Anteile Kaliumcarbonat eingesetzt werden, wird eine Bildung von Wasser bei der Reaktion weitgehend vermieden und eine Mitverwendung von Azeotropbildnern ist nicht erforderlich. Werden weniger als diese Anteile Kaliumcarbonat eingesetzt, so ist das Molekulargewicht der Endprodukte niedriger als gewünscht (Seite 5 der DE-OS).

Als Reaktionstemperaturen dienen Temperaturen von 80° C bis zum Siedepunkt des verwendeten Lösungsmittels, vorzugsweise Temperaturen von 100° C bis 5° C unterhalb des Siedepunktes des verwendeten Lösungsmittels.

So beträgt bei Verwendung von Dimethylformamid die Reaktionstemperatur 80° C bis 153° C, vorzugsweise 100° C bis 148° C. Eine azeotrope Destillation wird nicht vorgenommen.

Demgegenüber unterscheidet sich das erfindungsgemäße Verfahren dadurch, daß mit N-alkylierten Säureamiden, vorzugsweise zyklischen Säureamiden wie N-Methylpyrrolidon oder N-Methylcaprolactam als Lösungsmittel gearbeitet wird, die im Siedepunkt wesentlich oberhalb des Dimethylformamids liegen und damit höhere Reaktionstemperatur und Reaktionsgeschwindigkeit zur Folge haben. Außerdem kommt das erfindungsgemäße Verfahren mit einem Mol Kaliumcarbonat pro Mol Bisphenol aus. Das dabei gebildete Wasser wird azeotrop, jedoch ohne zusätzliches Schleppmittel, quantitativ aus dem Reaktionsgefäß entfernt. Durch die Lehre der DE-OS 1 957 091 wird weder die Verwendung der bevorzugten N-alkylierten zyklischen Säureamide noch eine azeotrope Enterfernung des bei der Reaktion gebildeten Wassers durch das Lösungs-mittel selbst nahegelegt.

Aus der DE-OS 2 731 816 ist die Herstellung von Polyethersulfonen beschrieben, wobei die Umsetzung in polaren, aprotischen Lösungsmitteln mit Alkalicarbonat als Base und unter Verwendung eines zusätzlichen Wasser-Azeotropbildners vorzugsweise Chlorbenzol durchgeführt wird. Als polare aprotische Lösungsmittel dienen beispielsweise N-substituierte Säureamide wie, N,N-Dimethylformamid, N,N-Dimethylacetamid, N-Methylpyrrolidon, wobei bevorzugt N-Methylpyrrolidon verwendet wird.

Die Umsetzung erfolgt durch stufenweise Reaktionsführung, wobei in der zweiten Reaktionsstufe weiterer Azeotropbildner zugesetzt sowie nach Entfernung des Wassers wieder entfernt wird und in der dritten, wasserfreien Polykondensationsstufe die Polymerisation durch Zugabe von Methylchlorid gestoppt wird. Die stufenweise Reaktionsführung gemäß DE-OS 2 731 816 führt jedoch zu wesentlich längeren Reaktionszeiten und erschwert eine kontinuierliche Synthese. Diese stufenweise Reaktionsführung tritt beim erfindungsgemäßen Verfahren nicht auf, da Lösungsmittel und Azeotropbildner identisch sind. Somit geht die Wasserentfernung kontinuierlich in die eigentliche Polykondensation über.

In der DE-PS 2 803 873 erfolgt die Herstellung des Polyethersulfons unter Verwendung von Natriumcarbonat oder -bicarbonat und einem zweiten Alkalimetallcarbonat oder -bicarbonat als Base und unter Verwendung von Lösungsmitteln. Als Lösungsmittel werden Sulfone wie Diphenylsulfon, Sulfolan und N,N-Dimethylformamid oder N-Methyl-2-pyrrolidon genannt. Bevorzugtes Lösungsmittel ist Diphenylsulfon (Anspruch 6). Die Reaktionstemperaturen liegen zwischen 100 °C und 400 °C. Auf die Zugabe eines Schleppmittels wird verzichtet. Eine azeotrope Destillation wird nicht vorgenommen. Die Herstellung der Polyethersulfone gemäß DE-PS 2 803 873 kann auch ohne Lösungsmittel erfolgen.

Da in der genannten DE-PS auf eine azeotrope Entfernung des Wassers verzichtet wird, werden zum Erreichen befriedigender Molekulargewichte sehr hohe Temperaturen (um 320 °C) benötigt. Diese thermische Belastung der Polyethersulfone kann zu mehr oder minder stark verfärbten Produkten führen.

Demgegenüber wird beim erfindungsgemäßen Verfahren des bei der Reaktion entstehende Wasser quantitativ als Lösungsmittel/Wasser-Azeotrop entfernt. Diese Verfahrensweise wird durch die DE-PS nicht nahegelegt.

Das erfindungsgemäße Verfahren wird im Temperaturbereich von 150 bis 270 °C durchgeführt und führt in kurzen Reaktionszeiten zu Polymeren mit hohem Molekulargewicht und hellem Rohton.

Die Verwendung von N-Methylcaprolactam als Lösungsmittel und Azeotropbildner wird durch die DE-PS nicht nahegelegt.

Die nach dem erfindungsgemäßen Verfahren erhältlichen Polyethersulfone haben vorzugsweise eine Grundstruktur, die aus wiederkehrenden Einheiten der Formel (I)

-[-O-Z-O-W-]- (I)

besteht.

Darin bedeuten:

Z den Rest eines zweiwertigen Phenols und

W den Rest benzoiden Dihalogenverbindung mit einer inerten, elektronenanziehenden Gruppe,

wobei gilt, daß beide Reste durch aromatische Kohlenstoffatome über Valenzbindungen mit den Ethersauerstoffatomen verbunden sind und mindestens einer der Reste Z und/oder W eine Sulfongruppe zwischen aromatischen Kohlenstoffatomen liefert. Solche Polyethersulfone gehöhren in die in der USA-Patentschrift 3 264 536 beschriebene Klasse von Polyarylen-poly-etherharzen.

Besonders bevorzugte Diphenole für die Herstellung der aromatischen Polyethersulfone sind Verbindungen der Formel (II)

HO - Z - OH (II)

worin Z einen zweiwertigen ein- oder mehrkernigen aromatischen Rest mit 6 - 30 C-Atomen bedeutet, wobei Z derart gebaut ist, daß die beiden OH-Gruppen direkt an je ein C-Atom eines aromatischen Systems gebunden sind.

Ganz besonders bevorzugte Diphenole sind Verbindungen der Formel (III)

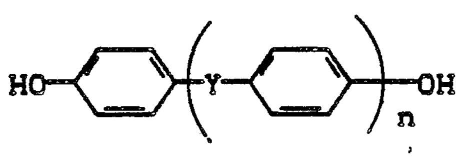 (III),

in der
n Null oder 1 ist und
Y eine Einfachbindung, einen Alkylen- oder Alkylidenrest mit 1 - 7 C-Atomen, einen Cycloalkylen- oder Cycloalkylidenrest mit 5 - 12 C-Atomen, -O-, -S-, $-\underset{\underset{O}{\|}}{S}-$,

$$-\overset{\overset{O}{\|}}{\underset{\underset{O}{\|}}{S}}-$$

oder $-\underset{\underset{O}{\|}}{C}-$ bedeutet,
sowie deren kernalkylierte und kernhalogenierte Derivate.

Beispiele für Diphenole sind
Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-ether,
Bis-(hydroxyphenol)-ketone,
Bis-(hydroxyphenyl)-sulfoxide,
Bis-(hydroxyphenyl)-sulfone und
α,α′-Bis-(hydroxyphenyl)diisopropylbenzole
sowie deren kernalkylierte und kernhalogenierte Derivate.

Die wichtigsten Diphenole sind: Hydrochinon, 4,4-Dihydroxydiphenyl, 2,2-Bis-(4-hydroxyphenyl)-propan, Bis-(4-hydroxyphenyl)-methan, 4,4′-Dihydroxybenzophenon, 4,4′-Dihydroxydiphenylether , 4,4′-Dihydroxydiphenylsulfid, 4,4′-Dihydroxydiphenyl-sulfon , 1,4-Bis-(4-hydroxybenzoyl)-benzol und 1,3-Bis-(4-hydroxybenzoyl)-benzol sowie deren kernsubstituierte Derivate, wobei als Substituenten vorzugswiese $CH_3$, Cl oder Br in Frage kommen, Ein kernmethyliertes Derivat ist 2,2-Bis-(4-hydroxy-3,5-dimethylphenyl)-propan.

Besonders bevorzugte Diphenole sind 2,2-Bis-(4-hydroxyphenyl)-propan, 4,4′-Dihydroxydiphenyl, 4,4′-Dihydroxydiphenylether, Hydrochinon, 4,4′-Dihydroxydiphenylsulfon, 4,4′-Dihydroxybenzophenon und 2,2-Bis-(4-hydroxy-3,5-dimethylphenyl)-propan.

Es können auch Gemische von Diphenolen eingesetzt werden.

Erfindungsgemäß geeignete Dihalogenaryle sind solche, die als Halogen F, Cl, Br oder J-Atome besitzen, die zumindestens zweikernig sind und elektronenanziehende Gruppen enthalten. Beispiele darür sind 4,4′-Difluordiphenylsulfon, 2,4′-Difluordiphenylsulfon, 4,4′-Dichlordiphenylsulfon, 2,4′-Dichlordiphenylsulfon, 1,4-Bis-(4′-fluorphenyl-1′-sulfonyl)-benzol, 1,4-Bis-(4′-chlorphenyl-1′-sulfonyl)-benzol, 1,3-Bis-(4′-chlorphenyl-1′-sulfonyl)-benzol, 4,4′-Bis-(4″-fluorphenyl-1″-sulfonyl)-diphenyl, 4,4′-Bis-(4″-chlorphenyl-1″-sulfonyl)-diphenyl, 4,4′-Bis-(4″-fluorphenyl-1″-sulfonyl)-diphenylether und 4,4′-Bis-(4″-chlorphenyl-1″-sulfonyl)-diphenylether.

Die Dihalogenverbindungen können allein oder im Gemisch eingesetzt werden.

Bevorzugte Dihalogenaryle sind zweikernige Verbindungen der Formel (IV)

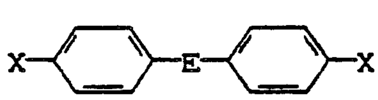 (IV)

Darin bedeuten X Halogenatome wie F, Cl, Br, J-Atome und E elektronenanziehende Gruppen, wie beispielsweise eine Sulfon-, Carbonyl-, Vinyl-, Sulfoxid- oder Azogruppe. Jeder der beiden Kerne kann zusätzlich eine oder mehrere Substituenten aus der Gruppe der gesättigten Kohlenwasserstoffe oder der elektronenanziehenden Verbindungen tragen.

Bevorzugte aromatische Dihalogenverbindungen sind 4,4′-Dichlordiphenylsulfon und 4,4′-Dichlorbenzophenon.

Erfindungsgemäß zu verwendende N-alkylierte Säureamide sind solche von $C_1$-$C_{18}$-Carbonsäuren und N,N-Dialkylaminen, deren Alkylreste 1 bis 4 C-Atome haben können. Beispiele sind Dimethylformamid und Dimethylacetamid. Geeignet sind besonders cyclische Säureamide von N-$C_1$-$C_4$-Alkyl-w-amino-$C_4$-$C_6$-carbonsäuren. Beispiele sind N-Methylpyrrolidon und N-Methyl-caprolactam. Besonders bevorzugt ist N-Methylcaprolactam.

Die N-alkylierten Säureamide werden in Mengen von 5 bis 100 Molen, vorzugsweise von 10 bis 20 Molen, bezogen auf 1 Mol Diphenol oder auf 1 Mol Dihalogenarylverbindung verwendet.

Als wasserfreie Alkalicarbonate kommen beispielsweise Natrium- und vorzugsweise Kaliumcarbonat in Betracht. Pro Mol Diphenol oder pro Mol Dihalogenarylverbindung werden 1 bis 2, vorzugsweise 1,0 bis 1,2 Mol Alkalicarbonat eingesetzt.

Das erfindungsgemäße Verfahren wird im einzelnen beispielsweise durchgeführt, indem man die Diphenole und die Dihalogenaryle in Gegenwart des Alkalicarbonats in den N-alkylierten Säureamiden löst, wobei alle Substanzen vorzugsweise nur in wasserfreiem Zustand eingesetzt werden, und die so erhaltene Reaktionsmischung auf die Siedetemperatur der Systeme erhitzt, welche zwischen etwa 130° C und etwa 265° C liegen kann. Diese Temperaturen der Säureamid/$H_2O$-Gemische liegen etwa 5° C bis 20° C unter der Siedetemperatur der einsetzbaren N-alkylierten Säureamide selbst.

Die Reaktionsmischung wird, 0,5 bis 4 Stunden, vorzugsweise 1 bis 2 Stunden bei dieser Temperatur gehalten, bis 95 bis 100 %, vorzugsweise 99 bis 100 % der theoretisch möglichen Wassermenge entfernt sind. Das Säureamid/Wasser-Gemisch kann in üblichen Vorrichtungen, beispielsweise Wasserabscheidern verschiedener Art, aufgefangen werden. Es ist auch möglich, das N-alkylierte Säureamid im Kreislauf zu führen, wenn das Wasser kontinuierlich in üblichen Trocknungsvorrichtungen entfernt wird.

Der Wassergehalt des Säureamid/Wasser-Gemisches kann aus dem Brechungsindex des Systems bestimmt werden.

Nach einer quantitativen Enterfernung des Reaktionswassers wird die Temperatur des Reaktionsgemisches auf die Siedetemperatur des N-alkylierten Säureamids, 150 bis 270° C, vorzugsweise 180 bis 250° C erhöht. Das aromatische Polyethersulfon entsteht nach dieser Verfahrensweise innerhalb von 0,5 bis 10 Stunden, vorzugsweise 1 bis 5 Stunden in hohen Ausbeuten (>95 %).

Die Isolierung der aromatischen Polyethersulfone kann auf verschiedene Weise durchgeführt werden. Eine Abscheidung des festen Polymeren kann durch Mischen der Reaktionslösung mit einem Fällungsmittel, z.B. Wasser und/oder Methanol, durch starkes Rühren, Verspritzen oder Verdüsen geschehen. Andererseits kann das N-alkylierte Säureamid auch verdampft werden. Die anorga nischen Bestandteile können durch geeignete Methoden wie Lösen oder Filtrieren aus dem isolierten Polyethersulfon entfernt werden.

Die mit Hilfe des erfindungsgemäßen Verfahrens hergestellten Polyethersulfone besitzen reduzierte Viskositäten (gemessen bei 25° C in Chloroform) von 0,10 bis 1,50 dl/g, vorzugsweise von 0,30 bis 0,75 dl/g.

Die so hergestellten Polyethersulfone können als Formkörper, Filme, Fasern oder Oberflächenbeschichtungen in bekannter Weise verwendet werden. Sie können in Form von Blends mit anderen Polymeren verwendet oder mit Füllstoffen der verschiedensten Art versetzt werden.

Der technische Einsatz der nach dem erfindungsgemäßen Verfahren erhältlichen hochmolekularen, aromatischen Polyethersulfone erfolgt beispielsweise im Elektrosektor (z.B. für Steckerleisten, Spulenkörper oder Seitenplatten), bei Haushaltsgeräten (z.B. für Saftpressen, Kaffeemaschinen, Mixer oder Mikrowellengeschirr) sowie im Automobilsektor.

## Beispiele

Die Beispiele 1 bis 4 sowie die Vergleichsbeispiele 1 bis 4 werden in N-Methylpyrrolidon als N-alkyliertem Säureamid durchgeführt. Die Gesamtreaktionszeiten und reduzierten Viskositäten sind in Tabelle 1 zusammengefaßt.

### Beispiel 1

In einem 1-l-Dreihalskolben, versehen mit Gaseinleitungsrohr, Glasrührer, Wasserabscheider mit Rückflußkühler und Innenthermometer werden 0,25 Mol 2,2-Bis-(4-hydroxyphenyl)-propan (Bisphenol A) und 0,25 Mol 4,4′-Dichlordiphenylsulfon gelöst in 225 ml N-Methylpyrrolidon sowie 0,275 Mol wasserfreies Kaliumcarbonat unter Stickstoff vorgelegt. Die Reaktionsmischung wird unter Rühren auf die Siedetemperatur des Gemisches von etwa 180 °C erhöht. Innerhalb von 1 Stunde ist das entstehende Reaktionswasser durch azeotrope Destillation vollständig aus dem System entfernt. Nach Entfernen des Wassers erhöht man die Innentemperatur auf 190 °C, also 10 °C unterhalb der Siedetemperatur des reinen N-Methylpyrrolidons. Die Reaktion wird anschließend noch etwa 2 Stunden fortgesetzt, wobei sich die Viskosität der Reaktionslösung schnell erhöht.

Zur Aufarbeitung wird die 60 °C warme Reaktionslösung in der 10-fachen Menge Methanol ausgefällt, anschließend das faserig angefallene, weiße Polymer abfiltriert, mit Wasser elektrolytfrei gewaschen und getrocknet. Die Ausbeute beträgt mehr als 97 % der Theorie.

Vom getrockneten Produkt wird die reduzierte Viskosität in Chloroform bei 25 °C bestimmt (0,2 g Polymer/100 ml $CHCl_3$). Sie beträgt $\eta_{red}$ = 0,52 dl/g.

Beispiel 2

Beispiel 1 wird mit 4,4′-Dihydroxybiphenyl als Dihydroxyverbindung wiederholt. Es wird ein weißes Polymer mit einer reduzierten Viskosität von $\eta_{red}$ = 0,49 dl/g erhalten (gemessen in Chloroform bei 25 °C).

Beispiel 3

Beispiel 3 wird mit 4,4′-Dihydroxydiphenylsulfon als Bisphenol wiederholt. Die reduzierte Viskosität des erhaltenen reinweißen Polymeren beträgt $\eta_{red}$ = 0,40 dl/g (gemessen bei 25 °C in Dimethylformamid).

Beispiel 4

Beispiel 1 wird mit Tetramethylbisphenol A als Dihydroxyverbindung wiederholt. Das erhaltene Polymer besitzt eine reduzierte Viskosität von $\eta_{red}$ = 0,35 dl/g (gemessen in Chloroform bei 25 °C).

Vergleichsbeispiel 1

In einem 1-l-Dreihalskolben, versehen mit Gaseinleitungsrohr, Glasrührer, Wasserabscheider mit Rückflußkühler und Innenthermometer werden 0,25 Mol 2,2-Bis-(4-hydroxyphenyl)-propan, 0,25 Mol 4,4′-Dichlordiphenylsulfon, 225 ml N-Methylpyrrolidon, 100 ml Chlorbenzol als Schleppmittel und 0,275 Mol wasserfreies Kaliumcarbonat unter Stickstoff vorgelegt. Die Reaktionsmischung wird unter Rühren auf 150 °C erhitzt. Innerhalb von 4 Stunden wird das entstehende Reaktionswasser durch azeotrope Destillation des Chlorbenzol/Wasser-Gemisches quantitativ aus dem System entfernt. Nach Entfernen des Wassers wird auf ca. 190 °C aufgeheizt, das Schleppmittel Chlorbenzol abdestilliert und anschließend 8 bis 10 Stunden bei dieser Temperatur weitergerührt.

Die Aufarbeitung erfolgt analog zu Beispiel 1. Die Ausbeute beträgt etwa 97 % der Theorie.

Vom getrockneten Produkt wird die reduzierte Viskosität in Chloroform bei 25 °C bestimmt (0,2 g Polymer/100 ml $CHCl_3$). Sie beträgt $\eta_{red}$ = 0,52 dl/g.

Vergleichsbeispiel 2

Vergleichsbeispiel 1 wird mit 4,4′-Dihydroxybiphenyl als Dihydroxyverbindung wiederholt. Es wird ein weißes Polymer mit einer reduzierten Viskosität von $\eta_{red}$ = 0,47 dl/g erhalten (gemessen in Chloroform bei 25 °C).

Vergleichsbeispiel 3

Vergleichsbeispiel 1 wird mit 4,4′-Dihydroxydiphenylsulfon als Bisphenolkomponente wiederholt. Die reduzierte Viskosität des erhaltenen weißen Polymers beträgt $\eta_{red}$ = 0,35 dl/g (gemessen bei 25 °C in Dimethylformamid).

Vergleichsbeispiel 4

Vergleichsbeispiel 1 wird mit Tetramethylbisphenol A als Dihydroxyverbindung wiederholt. Das erhaltene Polymer besitzt eine reduzierte Viskosität von $\eta_{red}$ = 0,31 dl/g (gemessen in Chloroform bei 25 °C).

Tabelle 1

Synthese von Polyethersulfonen in N-Methylpyrrolidon als N-alkyliertem Säureamid - Vergleich von Gesamtreaktionszeiten und reduzierten Viskositäten von Ansätzen mit und ohne Schleppmittel

| Beispiel | Gesamtreaktionszeit (Std.) | reduzierte Viskosität (dl/g) | Schleppmittel |
|---|---|---|---|
| 1 | 3,5 | 0,52 | - |
| 2 | 2,5 | 0,49 | - |
| 3 | 4,5 | 0,40* | - |
| 4 | 5 | 0,35 | - |
| VB 1 | 18 | 0,52 | Chlorbenzol |
| VB 2 | 9 | 0,47 | Chlorbenzol |
| VB 3 | 15 | 0,35* | Chlorbenzol |
| VB 4 | 18 | 0,31 | Chlorbenzol |

* gemessen in Dimethylformamid

Die Beispiele 5 bis 8 sowie die Vergleichsbeispiele 5 bis 8 werden in N-Methylcaprolactam als N-alkyliertem Säureamid durchgeführt. Die Gesamtreaktionszeiten und reduzierten Viskositäten sind in Tabelle 2 zusammengefaßt.

Beispiel 5

In einem 2-l-Vierhalskolben, versehen mit Gaseinleitungsrohr, Glasrührer, Wasserabscheider mit Rückflußkühler und Innenthermometer, werden 1,00 Mol 2,2-Bis-(4-hydroxyphenyl)-propan (Bisphenol A) und 1,00 Mol 4,4′-Dichlordiphenylsulfon, gelöst in 1000 ml N-Methylcaprolactam, sowie 1,10 Mol wasserfreies Kaliumcarbonat unter Stickstoff vorgelegt. Die Reaktionsmischung wird unter Rühren auf die Siedetemperatur des Gemisches von etwa 230 °C erhitzt. Innerhalb von 2 Stunden ist das entstehende Reaktionswasser durch azeotrope Destillation vollständig aus dem System entfernt. In dieser Zeit erhöht sich die Innentemperatur auf ca. 240 °C der Siedetemperatur des N-Methylcaprolactams. Die Reaktion wird anschließend bei ca. 235 °C noch etwa 3 Stunden fortgesetzt, wobei sich die Viskosität der Reaktionslösung schnell erhöht.

Zur Aufarbeitung wird die 80 °C warme Reaktionslösung in der 8-fachen Menge Wasser ausgefällt, anschließend das faserig angefallene, weiße Polymer abfiltriert, mit Wasser elektrolytfrei gewaschen und getrocknet. Die Ausbeute beträgt mehr als 97 % der Theorie.

Vom getrockneten Produkt wird die reduzierte Viskosität in Chloroform bei 25 °C bestimmt (0,2 g Polymer/100 ml $CHCl_3$). Sie beträgt $\eta_{red}$ = 0,53 dl/g.

Beispiel 6

Beispiel 5 wird mit 4,4′-Dihydroxybiphenyl als Bisphenolkomponente wiederholt. Es wird ein weißes Polymer mit einer reduzierten Viskosität von $\eta_{red}$ = 0,59 dl/g erhalten (gemessen in Chloroform bei 25 °C).

Beispiel 7

Beispiel 5 wird mit 4,4′-Dihydroxydiphenylsulfon als Dihydroxyverbindung wiederholt. Die reduzierte Viskosität des erhaltenen weißen Polymeren beträgt $\eta_{red}$ = 0,30 dl/g (gemessen in Dimethylformamid bei 25 °C).

Beispiel 8

Beispiel 5 wird mit Tetramethylbisphenol A als Dihydroxyverbindung wiederholt. Das erhaltene Polymer besitzt eine reduzierte Viskosität von $\eta_{red}$ = 0,30 dl/g (gemessen in Chloroform bei 25 °C).

Vergleichsbeispiel 5

In einem 2-l-Vierhalskolben, versehen mit Gaseinleitungsrohr, Glasrührer, Wasserabscheider mit Rückflußkühler und Innenthermometer, werden 1,00 Mol 2,2-Bis-(4-hydroxyphenol)-propan, 1,00 Mol 4,4′-Dichlordiphenylsulfon, 1000 ml N-Methylcaprolactam, 400 ml Chlorbenzol als Schleppmittel und 1,10 Mol wasserfreies Kaliumcarbonat unter Stickstoff vorgelegt. Die Reaktionsmischung wird unter Rühren auf ca. 142 °C erhitzt. Innerhalb von 3 h werden das entstehende Reaktionswasser durch azeo trope Destillation des Chlorbenzol/Wasser-Gemisches sowie anschließend in 4 h das Schleppmittel Chlorbenzol quantitativ aus dem System entfernt. Daraufhin wird auf 235 °C erhitzt und in 3 h die Kondensationsreaktion zu Ende geführt.

Die Aufarbeitung erfolgte analog zu Beispiel 5. Die Ausbeute beträgt mehr als 97% der Theorie.

Vom getrockneten Produkt wird die reduzierte Viskosität in Chloroform bei 25 °C bestimmt (0,2 g Polymer/100 ml $CHCl_3$). Sie beträgt $\eta_{red}$ = 0,53 dl/g.

Vergleichsbeispiel 6

Vergleichsbeispiel 5 wird mit 4,4′-Dihydroxydiphenyl als Dihydroxyverbindung wiederholt. Es wird ein weißes Polymer mit einer reduzierten Viskosität von $\eta_{red}$ = 0,53 dl/g erhalten (gemessen in Chloroform bei 25 °C).

Vergleichbeispiel 7

Vergleichsbeispiel 5 wird mit 4,4′-Dihydroxydiphenylsulfon als Bisphenolkomponente wiederholt. Die reduzierte Viskosität des erhaltenen weißen Polymers beträgt $\eta_{-red}$ = 0,28 dl/g (gemessen in Dimethylformamid bei 25 °C).

Vergleichsbeispiel 8

Vergleichsbeispiel 5 wird mit Tetramethylbisphenol A als Dihydroxyverbindung wiederholt. Das erhaltene Polymer besitzt eine reduzierte Viskosität von $\eta_{-red}$= 0,30 dl/g (gemessen in Chloroform bei 25 °C).

Tabelle 2

| Synthese von Polyethersulfonen in N-Methylcaprolactam als Lösemittel - Vergleich von Gesamtreaktionszeiten und reduzierten Viskositäten von Ansätzen mit und ohne Schleppmittel | | | |
|---|---|---|---|
| Beispiel | Gesamtreaktionszeit (h) | reduzierte Viskosität (dl/g) | Schleppmittel |
| 5 | 5 | 0,53 | - |
| 6 | 5 | 0,59 | - |
| 7 | 5 | 0,30* | - |
| 8 | 5 | 0,30 | - |
| VB 5 | 10 | 0,53 | Chlorbenzol |
| VB 6 | 10 | 0,53 | Chlorbenzol |
| VB 7 | 10 | 0,28* | Chlorbenzol |
| VB 8 | 10 | 0,30 | Chlorbenzol |

* gemessen in Dimethylformamid

**Ansprüche**

1. Verfahren zur Herstellung von hochmolekularen, aromatischen Polyethersulfonen durch Umsetzen von äquimolaren Mengen Diphenolen mit Dihalogenarylen in einem polaren, aprotischen Lösungsmittel in Gegenwart von wasserfreiem Alkalicarbonat, dadurch gekennzeichnet, daß man

a) 1 bis 1,2 Mol Alkalicarbonat pro Mol Diphenol einsetzt,

b) als polare Lösungsmittel N-alkylierte Säureamide mit Siedepunkten im Bereich von 150 °C bis 270 °C einsetzt und

c) in Abwesenheit zusätzlicher Schleppmittel das bei der Reaktion entstehende Wasser vollständig bei Temperaturen von 5 °C bis 20 °C unterhalb der Siedetemperatur des jeweiligen als Lösungsmittel eingesetzten N-alkylierten Säureamids azeotrop als N-alkyliertes Säureamid/Wasser-Gemisch entfernt.

2. Verfahren gemäß Anspruch 1, dadurch gekennzeichnet, daß man als polare Lösungsmittel N-alkylierte Säureamide mit Siedepunkten im Bereich von 180 °C bis 250 °C einsetzt.

3. Verfahren gemäß Anspruch 1, dadurch gekennzeichnet, daß als polare Lösungsmittel cyclische N-alkylierte Säureamide eingesetzt werden.

4. Verfahren gemäß Anspruch 3, dadurch gekennzeichnet, daß als polares Lösungsmittel N-Methylpyrrolidon eingesetzt wird.

5. Verfahren gemäß Anspruch 3, dadurch gekennzeichnet, daß als polares Lösungsmittel N-Methylcaprolactam eingesetzt wird.